# EUROPÄISCHE PATENTANMELDUNG

(11) **EP 3 961 052 A1**
(43) Veröffentlichungstag der Anmeldung: **02.03.2022**
(21) Anmeldenummer: 20199898.6
(22) Anmeldetag: 02.10.2020
(51) Int. Cl.: F16B 31/02, G01L 5/24

(54) **VERBINDUNGSMITTEL**

(30) Priorität: 27.08.2020 DE 102020210859
(71) Anmelder: Fraunhofer-Gesellschaft zur Förderung der angewandten Forschung e.V., 80686 München (DE)
(72) Erfinder: SPIES, Peter, 91058 Erlangen (DE); KNAUER, Johannes, 91056 Erlangen (DE); POLLAK, Markus, 91058 Erlangen (DE); WORM, Johannes, 91058 Erlangen (DE); KEMETH, Ferdinand, 91058 Erlangen (DE); PLOGMEYER, Marcel, 38108 Braunschweig (DE); BIEHL, Saskia Nina, 64289 Darmstadt (DE); GEMEINHARDT, Anja, 91058 Erlangen (DE); JARRESCH, Alexej, 91058 Erlangen (DE); DRÄGER, Tobias, 91058 Erlangen (DE)
(74) Vertreter: Pfitzner, Hannes

(57) **Zusammenfassung**

Verbindungsmittel, insbesondere Schraubverbindungsmittel, mit folgenden integrierten Merkmalen: einem Energieversorgungsmittel; einem (Kommunikationsmittel, und einer Sensorik, wobei die Energieversorgungsmittel ausgebildet sind, um die Sensorik und/oder die Kommunikationsmittel mit Energie zu versorgen, wobei die Kommunikationsmittel ausgebildet sind, um einen Sensorwert, der unter Zuhilfenahme der Sensorik ermittelt ist, nach extern zu übertragen.

## Beschreibung

Ausführungsbeispiele der vorliegenden Erfindung beziehen sich auf ein Verbindungsmittel, wie insbesondere ein Schraubverbindungsmittel. Weitere Ausführungsbeispiele beziehen sich auf ein zweigeteiltes Verbindungsmittel, beispielsweise umfassend eine Schraube und eine Unterlegscheibe. Entsprechend bevorzugten Ausführungsbeispielen umfassen die Verbindungsmittel eine Sensorik oder allgemein eine Elektronik.

Die Integration von Elektronik in mechanische Komponenten, wie zum Beispiel Verbindungsmittel, ist häufig problematisch, da für die Integration Bauraum freigehalten werden muss, der typischerweise zur Erreichung der mechanischen Stabilität benötigt wird. Ein externes Vorsehen von den Elektronikkomponenten schafft die Probleme, dass hier dann nicht mehr die Montagefreundlichkeit gegeben ist. Ein zusätzliches Problem schafft die Energieversorgung, die im Regelfall über externe Verdrahtung erfolgt, was wiederum Konflikte mit der Montagefreundlichkeit mit sich bringen kann. Deshalb besteht der Bedarf nach einem verbesserten Ansatz.

Aufgabe der vorliegenden Erfindung ist es, ein Konzept zu schaffen, das die Integration von Elektronikkomponenten, wie zum Beispiel Sensorik, in mechanische Elemente ermöglicht.

Die Aufgabe wird durch den Gegenstand der unabhängigen Patentansprüche gelöst.

Ausführungsbeispiele der vorliegenden Erfindung schaffen Schraubverbindungsmittel beziehungsweise ein Schraubverbindungssystem mit Energieversorgungsmitteln, Kommunikationsmitteln, wie zum Beispiel Weitbereichskommunikationsmitteln, und einer Sensorik. Die Energieversorgungsmittel sind ausgebildet, um die Sensorik und/oder die Kommunikationsmittel mit Energie zu versorgen. Die Kommunikationsmittel sind ausgebildet, um einen Sensorwert, der unter Zuhilfenahme der Sensorik ermittelt ist, nach extern zu übertragen.

Entsprechend bevorzugten Ausführungsbeispielen sind die Verbindungsmittel beziehungsweise Schraubverbindungsmittel in Form eines Schraubverbindungselements mit all den genannten Komponenten ausgeführt. Entsprechend einem weiteren bevorzugten Ausführungsbeispiel sind die Schraubverbindungsmittel als Schraubverbindungssystem mit zumindest zwei einzelnen Elementen, wie zum Beispiel einer Schraube und einer Unterlegscheibe, ausgeführt. Bei der Sensorik kann es sich beispielsweise um eine Kraftsensorik handeln.

Ausführungsbeispielen der vorliegenden Erfindung liegt die Erkenntnis zugrunde, dass in einer Schraube oder mit der Schraube verbundene Elemente, wie zum Beispiel eine Beilagscheibe, beziehungsweise allgemein in Komponenten der Verbindungsmittel, eine Elektronik gut integrierbar ist, z. B. in einen Hohlraum in dem Schraubenschaft beziehungsweise dem Schraubenkopf. Dieses System kann eine integrierte Sensorik aufweisen, die unter Verwendung von Kommunikationsmitteln die Sensordaten nach extern überträgt. Die Integration in Schraubverbindungsmittel ist deshalb vorteilhaft, weil diese bei unterschiedlichen Anwendungen verwendet werden, so dass die Integration von Elektronik in mechanische Systeme ohne Neudesign möglich wäre.

Wie oben bereits angedeutet, kann das Schraubverbindungsmittel als Schraubverbindungssystem vorliegen, mit einer Schraube oder Mutter als erstes Element und einer Unterlegscheibe als zweites Element. Die Sensorik, wie zum Beispiel die Kraftsensorik, kann dann in die Unterlegscheibe integriert sein, während die anderen Elemente, wie zum Beispiel die Energieversorgungsmittel und die Kommunikationsmittel, in die Schraube beziehungsweise Mutter integriert sind. Mittels der Sensorik beziehungsweise Kraftsensorik kann beispielsweise der feste Sitz der Schraubverbindung sensiert werden. Bei einer als Kraftsensorik ausgelegten Unterlegscheibe kann entsprechend Ausführungsbeispielen davon ausgegangen werden, dass diese Unterlegscheibe selbst zwei Elemente aufweist, zwischen welchen die Sensorik integriert ist. Entsprechend Ausführungsbeispielen ist die Sensorik mit der Energieversorgung und/oder den Kommunikationsmitteln über Kabel verbunden. Entsprechend Ausführungsbeispielen kann die Kabelverbindung zwischen Schraube und Unterlegscheibe in einer Art Aussparung oder konzentrischen Aussparung vorgesehen sein. Die Aussparung beziehungsweise konzentrische Aussparung ist bevorzugter Weise in der Unterlegscheibe integriert und zwar auf der der Schraube beziehungsweise Mutter zugewandten Seite. Hierdurch wird ein Quetschen verhindert. Darüber hinaus weist entsprechend weiteren Ausführungsbeispielen die Schraube oder die Mutter und/oder die Unterlegscheibe auf einer jeweils dem anderen Element zugewandten Seite einen Mitnehmer auf, der ausgebildet ist, eine Verdrehung der Schraube oder der Mutter gegenüber der Unterlegscheibe einzuschränken. Das ermöglicht ebenfalls einen Schutz der Kabelverbindung. Entsprechend alternativen Ausführungsbeispielen wäre eine induktive oder kapazitive Kopplung denkbar. Auch wäre es denkbar, dass eine andere Kontaktverbindung ausgebildet wird.

Bezüglich den Energieversorgungsmitteln sei angemerkt, dass diese beispielsweise einen Energie-Harvester, wie zum Beispiel einen thermischen Energie-Harvester, eine Solarzelle als Energie-Harvester oder einen Vibrationswandler als Energie-Harvester, aufweisen können. Bezüglich der Kommunikationsmittel sei angemerkt, dass diese als Weitbereichskommunikationsmittel, wie zum Beispiel WiFi oder Long-Range-Bluetooth, ausgebildet sein können. Zusätzlich kann die Schraube auch noch Nahbereichskommunikationsmittel aufweisen, die im Gegensatz zu den Weitbereichskommunikationsmitteln auch ohne Energieversorgung durch die Energieversorgungsmittel betreibbar sind. RFID ist ein exemplarischer Vertreter dieser Nahbereichskommunikationsmittel. An dieser Stelle sei angemerkt, dass entsprechend Ausführungsbeispielen die Weitbereichskommunikationsmittel und die Nahbereichskommunikationsmittel in einem identischen oder zumindest partiell überlappenden oder nicht überlappenden Frequenzbereich, wie die Kommunikationsmittel beziehungsweise Weitbereichskommunikationsmittel, kommunizieren. Der überlappende beziehungsweise partiell überlappende Frequenzbereich ist deshalb vorteilhaft, da so auf eine gemeinsame Antenne zugegriffen werden kann. Ferner könnte man die RFID Signale als Wakeup Signal für den anderen Funkchip benutzen.

Wie oben bereits erläutert, sind die Elektronikkomponenten, wie zum Beispiel Energieversorgungsmittel und/oder die Kommunikationsmittel, in einer Art Aussparung, wie zum Beispiel einer Ausfräsung der Schraube oder des Schraubenschaftes, angeordnet.

Entsprechend Ausführungsbeispielen umfasst die Sensorik eine Temperatursensorik oder eine Kraftsensorik oder eine weitere Sensorik. Zusätzlich kann entsprechend Ausführungsbeispielen ein Prozessor vorhanden sein, der mit der Sensorik verbunden ist und ausgebildet ist, den Sensorwert digital oder analog zu ermitteln. Beispielweise wäre eine Ermittlung auf Basis einer Frequenz, die über einen Widerstand als frequenzbestimmendes Element variiert wird, auslesbar. Ein Widerstand aus dem frequenzbestimmendem Element kann zum Beispiel zur Temperaturmessung verwendet werden, da der Widerstand sich temperaturabhängig verhält oder auch zur Kraftmessung, wenn man zum Beispiel von Dehnungsmessstreifen (veränderte Impedanz) oder von Piezoelementen ausgeht. Der Prozessor ist beispielweise zusammen mit den Energieversorgungsmitteln und/oder den Kommunikationsmitteln angeordnet und liest den Sensorwert in Bezug auf den Prozessor beziehungsweise die Energieversorgungsmittel beziehungsweise die Kommunikationsmittel des extern angeordneten Sensors aus. Insofern ist die gesamte Intelligenz beispielsweise in der Schraube beziehungsweise dem Schraubenkopf beziehungsweise der Mutter angeordnet.

Ein weiteres Ausführungsbeispiel schafft ein Verbindungsmittel mit einer Schraube, wobei ein Kühlkörper als Teil des Schraubenkopfes vorgesehen ist.

Weitere Bildungen sind in den Unteransprüchen definiert. Ausführungsbeispiele der vorliegenden Erfindung werden anhand der beiliegenden Zeichnungen erläutert. Es zeigen:
- Fig. 1: eine schematische Darstellung eines Verbindungsmittels, insbesondere Schraubverbindungsmittels, gemäß einem Basisausführungsbeispiel;
- Fig. 2a: eine schematische Darstellung einer Schraube als Teil der Verbindungsmittel gemäß erweiterten Ausführungsbeispielen;
- Fig. 2b: eine schematische Darstellung einer Messelektronik für die Verbindungsmittel gemäß erweiterten Ausführungsbeispielen;
- Fig. 2c: eine schematische Darstellung einer Unterlegscheibe mit integrierter Sensorik gemäß erweiterten Ausführungsbeispielen.

Bevor nachfolgend Ausführungsbeispiele der vorliegenden Erfindung anhand der beiliegenden Zeichnung erläutert werden, sei darauf hingewiesen, dass gleichwirkende Elemente und Strukturen mit gleichen Bezugszeichen versehen sind, so dass die Beschreibung derer aufeinander anwendbar ist.

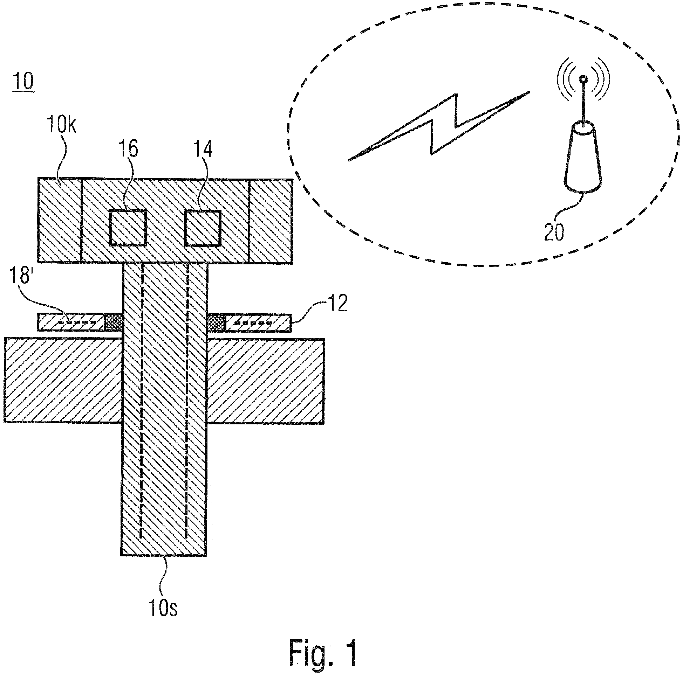

Fig. 1 zeigt Verbindungsmittel 10, hier in Form einer Schraube mit einem Schraubenkopf 10k und einem Schraubenschaft 10s. Die Verbindungsmittel 10 umfassen weiter eine Beilagscheibe 12, die auf den Schraubenschaft 10s beispielsweise gesteckt ist und mit der Unterseite des Schraubenkopfes 10k (Seite in Richtung des Schaftes 10s) in Kontakt bringbar ist.

Die Verbindungsmittel sind in diesem Ausführungsbeispiel also zweigeteilt ausgeführt, wobei das optional ist und entsprechend weiteren Ausführungsbeispielen auch eine einteilige Ausführung denkbar wäre.

Die Schrauben 10k + 10s umfassen eine Elektronik, die beispielsweise Kommunikationsmittel 14 sowie Energieversorgungsmittel 16 umfassen kann. Die Kommunikationsmittel können beispielsweise Weitbereichskommunikationsmittel (Bluetooth, Bluetooth-Long-Range, UWIN, etc.) umfassen und sind dazu ausgebildet, um eine Information, z. B. eine mit einer Sensorik gewonnen Information, nach extern zu übertragen. Auch wäre es denkbar, dass eingespeicherte Informationen, wie zum Beispiel eine Positionsinformation oder eine ID, nach extern übertragen werden. Entsprechend einer weiteren Variante wäre es auch denkbar, dass sogenannte Nahbereichskommunikationsmittel (vgl. RFID) Verwendung finden. Die Nahbereichskommunikationsmittel sind alternativ oder additiv zu verstehen. Zur Stromversorgung der Kommunikationsmittel 14 wird die Stromversorgungseinheit 16 verwendet.

Die Stromversorgungseinheit 16 kann beispielweise Energie vorhalten, z. B. durch Verwendung eines Akkus, Energie-Harvestern, z. B. durch einem Temperatur-Harvester oder Vibrations-Harvester oder auch einen Energiefluss steuern, wenn zum Beispiel über Nahbereichskommunikationsmittel durch ein Sendewechselfeld eine externe Energie zum Betreiben der Kommunikationsmittel 14 bereitgestellt wird. Entsprechend Ausführungsbeispielen ist die Energieversorgungsschaltung also mit einem Energie-Harvester, mit einem Energiespeicher, mit einem Gleichrichter und/oder mit Spannungswandlern ausgestattet. Alternative Harvesting-Varianten, wie zum Beispiel auf Basis von Photovoltaik beziehungsweise Solarthermie, wären denkbar.

An dieser Stelle sei angemerkt, dass entsprechend Ausführungsbeispielen die Energieversorgungsmittel 16 nicht nur die Funkkommunikationsmittel 14, sondern auch weitere Mittel, wie zum Beispiel eine externe Sensorik beziehungsweise eine interne Sensorik, mit Energie versorgen kann. Bei diesem Ausführungsbeispiel, das hier in Fig. 1 dargestellt ist, weist die Beilagscheibe 12 eine Sensorik 18, hier in Form einer Diaforce-Schicht, auf. Die Diaforce-Schicht 18 ist beispielsweise ausgebildet, um statische und dynamische Kraftmessungen durchzuführen. Beispielsweise wäre eine Kraft zwischen der ersten Hauptoberfläche und der zweiten Hauptoberfläche detektierbar, was einen Rückschluss auf den Sitz der Schraubverbindung zulässt. Selbstverständlich wären auch andere (das heißt alternative beziehungsweise additive) physikalische Messgrößen, wie zum Beispiel eine Temperatur, ermittelbar. Entsprechend Ausführungsbeispielen ist die Sensorik 18 mit der Elektronik 14 und 16 so gegebenenfalls mit einem optionalen Prozessor (nicht dargestellt) verbunden. Als Verbindungen kommen Kabelverbindungen, kapazitive Verbindungen, induktive Verbindungen oder einfache Kontaktverbindungen zum Einsatz.

Durch Verwendung der Funkkommunikationsmittel 14 können die mittels der Sensorik 18 ermittelten Sensordaten nach extern übermittelt werden. Wenn man beispielsweise von UWIN oder MIOTY LP-WAN als Funkstandard ausgeht, können diese Sensordaten an eine externe Basisstation 20 übertragen werden. Die erforderliche Energie stellen die Energieversorgungsmittel 16 dar. Ausgehend von einem MIOTY LPWAN ist der Energiebedarf begrenzt, da dieser Standard eine sehr energieeffiziente und gleichzeitig zuverlässige Datenübertragung ermöglicht. Entsprechend einer bevorzugten Variante ist die Antenne der Funkkommunikationsmittel 14 beispielsweise im Schraubenkopf 10k angeordnet, um so an die metallische Umgebung gut angepasst zu sein. Eine alternative Anpassung wäre denkbar. Entsprechend weiteren Ausführungsbeispielen können die Funkkommunikationsmittel alternativ oder zusätzlich Nahbereichskommunikationsmittel, wie zum Beispiel RFID, verwenden. Diese benötigen keine integrierte aktive Stromversorgung, sondern basieren im Regelfall darauf, dass mittels einer Stromversorgungsschaltung 16 kurzzeitig die Komponenten (Sensorik, Prozessor und Funkkommunikationsmittel 14) mit Energie versorgt werden. RFID ermöglicht die Auslesung von aktuellen Sensordaten, eine individuelle Konfiguration des Systems 10 sowie auch eine Identifikation des Systems 10, wenn beispielsweise eine ID in den Funkkommunikationsmitteln 14 gespeichert ist. Eine Information, z.B. über den Zustand der Schraubverbindung, könnte dann auch über ein Leuchtmittel, beispielsweise einer LED, angezeigt werden.

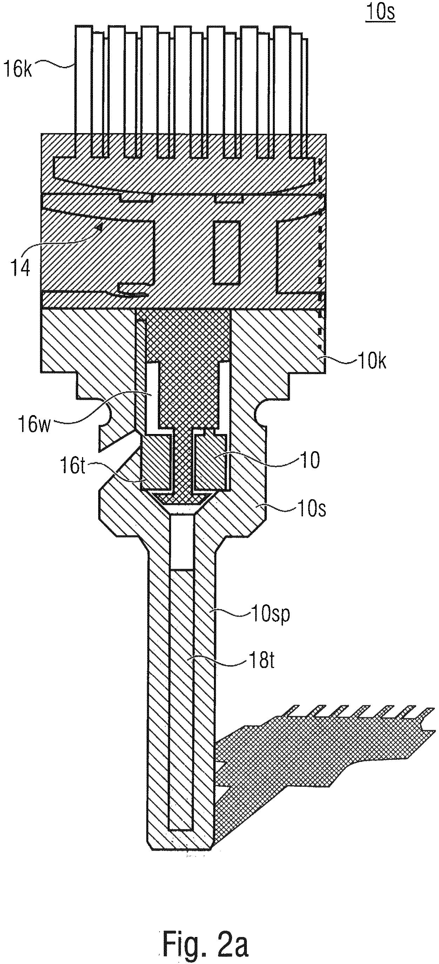

Vorteilhafter Weise schafft dieses Verbindungsmittel 10 so ein wartungsfreies, robustes Sensorsystem zur kognitiven Überwachung beziehungsweise auch Fernüberwachung von sicherheitskritischen mechanischen Verbindungen und auch komplexen Strukturen. Anwendungen sind beliebige Schraubverbindungen, beispielsweise an Bauwerken, Produktionsanlagen, Windkraftanlagen, Maschinenteilen, etc. Bezug nehmend auf Fig. 2a wird nun eine Schraube als Teil der Verbindungsmittel erläutert.

Fig. 2a zeigt eine Schraube 10s mit einem Schraubenkopf 10k, einem Schraubenschaft 10s und einer optionalen Schraubenspitze 10sp. In einer Ausnehmung 10a der Schraube, die sich in den Schraubenschaft 10s und/oder die Schraubenspitze 10sp erstreckt, ist ein Thermogenerator 16t als Energie-Harvester vorgesehen. Der Thermogenerator ist mit einem Wärmeleitelement 16w mit einem Kühlkörper 16k verbunden.

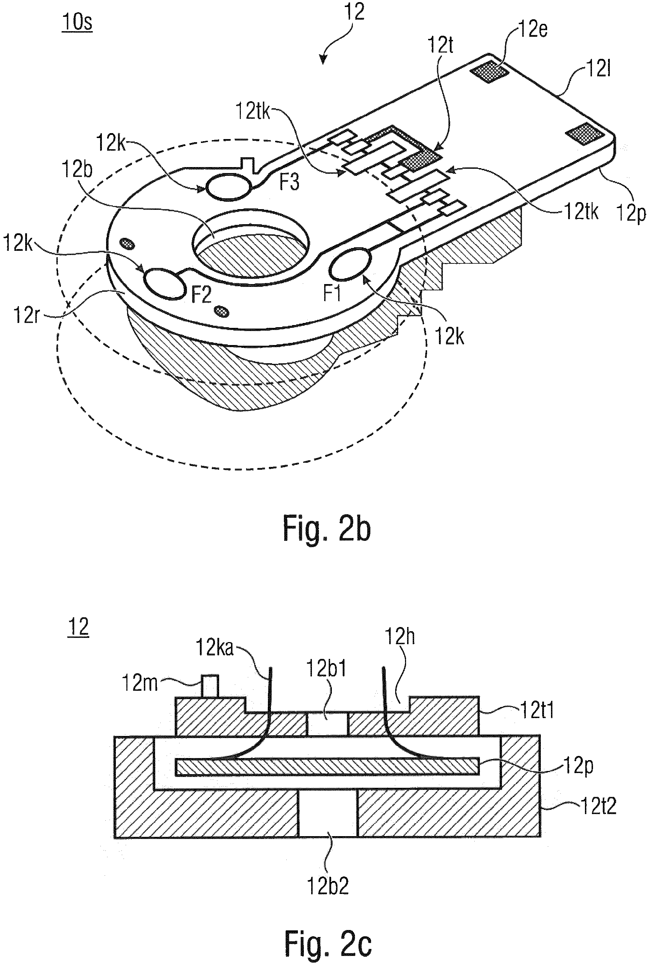

Darüber hinaus weist die Schraube auch noch eine Elektronik 14 auf, in welcher die Funckommunikationsmittel integriert sind. Die Elektronik ist in diesem Ausführungsbeispiel auf dem Schraubenkopf 10k als eine Art Verlängerung angebracht beziehungsweise zwischen dem Kühlkörper 16k und dem eigentlichen Schraubenkopf 10k. In diesem Ausführungsbeispiel kann die Sensorik entweder als Temperatursensorik 18t in der Schraubenspitze 10sp angeordnet sein oder auch extern, z. B. in einer Beilagscheibe 12 (vgl. Fig. 2b). In dem Kontaktbereich zwischen Schraubenkopf 10k und der Beilagscheibe 12 können Kabel zur Ankopplung der externen Sensorik vorgesehen sein.

An dieser Stelle sei darauf hingewiesen, dass die meisten Merkmale bei dieser Ausführung optional sind, so dass entsprechend Ausführungsbeispielen auch andere Arten von Energie-Harvestern ohne Kühlkörper 16k, Wärmebrücke 16w und Thermoelement 16t eingesetzt werden könnten. Auch sind der Temperatursensor 18t und die verlängerte Spitze 16sp optional. Bezüglich der Elektronik sei angemerkt, dass diese bevorzugter Weise eingebettet oder verschlossen ist, z. B. durch eine Art Vergussmasse, wie hier anhand der gestrichelten Linien zugehörig zu dem Schraubenkopf 10k dargestellt ist.

In Fig. 2b ist eine Variante einer Beilagscheibe 12, beziehungsweise insbesondere der auf einer Platine 12b vorgesehene Elektronik der Beilagscheibe 12 dargestellt. Die Platine 12b weist beispielsweise einen runden Bereich 12r und einen länglichen Ausleger 12l auf. Im runden Bereich 12r ist eine Bohrung 12b für den Schraubenschaft 10s vorgesehen. Diese umfasst eine Platine 12p mit einem oder mehreren Kraftmesselementen 12k. Hier sind drei Kraftmesselemente 12k angeordnet, die beispielsweise als Dehnungsmessstreifen oder auch als Diaforce-Elemente vorgesehen sein können. Die Kraftmesselemente 12k erstrecken sich tangential in dem runden Bereich 12r um die Bohrung 12b.

Optionaler Weise kann die Beilagscheibe 12 beziehungsweise der Sensor der Beilagscheibe 12 neben der Kraftsensorik 12k auch noch eine Temperatursensorik 12t aufweisen. Diese besteht beispielsweise aus einer Widerstandsstruktur. Sinn und Zweck dieser Temperatursensorik ist neben dem Sensieren der Temperatur auch die Möglichkeit eine Temperaturkompensation, z. B. der Kraftmesswerte, vorzunehmen. Eine entsprechende Temperaturkompensationsschaltung 12tk ist neben dem Temperatursensor 12t dargestellt, wobei auch die Leiterbahnen zu den Kraftsensoren 12k illustriert sind.

Entsprechend weiteren Ausführungsbeispielen weist die Platine 12p ein oder mehre elektrische Kontakte 12e auf, die es ermöglichen von extern, z. B. von der Elektronik 14 der Schraube 10s, kontaktiert zu werden.

Durch dieses System, bestehend aus Schraube 10s und Beilagscheibe 12, ist es möglich, dass die Kraftsensorwerte der Kraftsensoren 12k über die Elektronik 14 ausgelesen und nach extern übertragen werden.

Bezüglich den Auslesemodalitäten gibt es unterschiedliche Varianten. Entweder ist eine Art AD-Wandler in die Elektronik 14 oder die Elektronik der Beilagscheibe 12 integriert, so dass das analoge Signal, das von der physikalischen Messgröße abhängig ist, digitalisiert und übermittelt werden kann. Alternativ wäre es auch denkbar, dass die Sensorik 12k beziehungsweise 12t als frequenzbestimmendes Element ausgeführt ist. Beispielsweise können Widerstände eingesetzt werden, die in Abhängigkeit der einwirkenden Kraft oder in Abhängigkeit der Umgebungstemperatur einen entsprechenden Widerstands- beziehungsweise Impedanzwert ausbilden, wobei dann über eine Frequenzanregung ein sich in der Frequenz änderndes Signal abgegriffen werden kann, wobei die sich einstellende Frequenz einen Rückschluss auf die physikalische Messgröße bietet.

Bezug nehmend auf Fig. 2c wird nun eine Beilagscheibe 12 mit all ihren Bestandteilen erläutert. Die Beilagscheibe 12 umfasst zwei Teile 12t1 und 12t2. Zwischen diesen Teilen 12t1 und 12t2 ist eine Platine 12p mit entsprechender Sensorelektronik (nicht dargestellt) eingebracht. Der untere Teil 12t2 kann beispielsweise eine Aussparung für diese Platine 12p aufweisen. Der obere Teil 12t1 ist beispielsweise in diese Aussparung eingebettet und verschließt somit das Innere der Beilagscheibe 12. Die entsprechenden Bohrungen sind mit 12b1 und 12b2 für die zwei Teile 12t1 und 12t2 markiert. In diesem Ausführungsbeispiel kann davon ausgegangen werden, dass sich die Teile 12t1 und 12t2 konzentrisch zueinander und/oder radial symmetrisch um die Bohrachse erstrecken. Entsprechend Ausführungsbeispielen kann zusätzlich eine Stahlfolien zur Kraftflussleitung zwischen den beiden Elementen/Scheiben vorgesehen sein. D.h. dass die Unterlegscheibe mindestens zwei Elemente umfasst.

Entsprechend Ausführungsbeispielen weist der obere Teil 12t1 eine Nut 12n oder Ausfräsung auf der nach außen gerichteten Seite, das heißt also, auf der Seite, die der Schraube beziehungsweise dem Schraubenkopf 10k (vgl. Fig. 1 oder 2a) zugewandt ist. Diese Nut hat den Zweck, die von der Platine 12p nach außen ragenden Kabel 12ka bei Berührung des Schraubenkopfes 10k mit der Oberfläche des Teils 12t1 zu schützen. Entsprechend Ausführungsbeispielen kann diese Nut 12n auch Teil des Schraubenkopfes 10k sein. Entsprechend weiteren Ausführungsbeispielen kann die Beilagscheibe 12 beziehungsweise das Teil 12t1 eine Art Mitnehmer 12m aufweisen, der ausgebildet ist, mit einer Art Mitnehmer der Schraube (nicht dargestellt) zu interagieren und hierbei ein Verdrehen zwischen Scheibe 12 und Schraube zu verhindern beziehungsweise zumindest einzuschränken, um die Kabel 12ka zu schützen.

Auch wenn bei obigen Ausführungsbeispielen davon ausgegangen wurde, dass die Elektronik inklusive Energieversorgungsmittel und Funk in einer Schraube oder dem Schraubenkopf angeordnet ist, sei an dieser Stelle angemerkt, dass selbstverständlich auch eine Anordnung in einer Mutter, wie zum Beispiel in einer Hutmutter oder ähnlichem, denkbar wäre.

Nachfolgend werden optionale Aspekte der Schraube, insbesondere einer Schraube mit einem Thermogenerator, als Energie-Harvester erläutert.

Entsprechend einem Zusatzaspekt wird ein Verbindungsmittel geschaffen, wie zum Beispiel eine Schraube, mit einem Energieversorgungsmittel in Form von zumindest einem Thermoelement, wobei das zumindest eine Thermoelement in das Verbindungsmittel/die Schraube oder einen Schaft eingelassen ist.

Energieversorgungsmittel in Form von Thermoelementen ermöglichen die Verwendung einer Temperaturdifferenz zur Stromerzeugung. Dadurch, dass eine Schraube (allgemein Verbindungsmittel) eine gewisse Länge hat, kann eine Temperaturdifferenz zwischen Schraubenkopf und Schraubenspitze ausgenutzt werden. Höhere Temperaturdifferenzen können durch die Nutzung eines, von der Schraube thermisch entkoppelten, Kühlkörpers entstehen und mittels Energy Harvesting genutzt werden. Insofern liegt Zusatzaspekten der vorliegenden Erfindung die Erkenntnis zugrunde, dass durch (vertikale) Integration von Thermoelementen in eine Schraube die Möglichkeit besteht, Energie zu harvesten, auch wenn die Schraube an Orten befestigt ist, die keine ausreichende Bewegung, Vibration oder ähnliches haben, um andere Energie-Harvester-Verfahren zu ermöglichen. Vorteilhafter Weise kann mittels eines derartigen Energie-Harvesters eine komplette Sensorik, Auswerteelektronik und Funkübertragung eines Messsystems mit elektrischer Energie versorgt werden. Diese Elemente können beispielsweise in die Schraube, beziehungsweise in den Schraubenkopf, integriert sein oder an der Schraube oder dem Schraubenkopf angebracht sein. Hierdurch entfallen Kabel und Batterien, was sowohl die Installation als auch die Instandhaltung vereinfacht und dadurch Kosten spart. In manchen Anwendungen ist die Verwendung von Kabeln sogar unmöglich, da die Sensoren an einem schnell rotierenden Objekt angeordnet sind, so dass hier ein kompaktes integriertes System gewünscht ist. Auch Batterien können nicht überall eingesetzt werden, da diese aufgrund von hohen Temperaturen nicht verwendet werden können.

An dieser Stelle sei angemerkt, dass neben Schrauben als Verbindungsmittel auch Bolzen oder ähnliche (längliche) Elemente zum Einsatz kommen können. Da Schrauben die bevorzugten Ausführungsbeispiele darstellen, werden die optionalen Merkmale im Zusammenhang mit Schrauben erläutert, auch wenn die Merkmale auf alle Arten von Verbindungmittel, wie z.B. Bolzen, übertragbar sind.

Bei dem vorgestellten Aufbau liegt der besondere Vorteil in der vertikalen Anordnung der Thermogeneratoren in der Schraubenspitze. Bei einem Kaltstart des Systems wird an diesem Ort die erforderliche Temperaturdifferenz wesentlich früher erreicht. Somit ist das System schneller in Bereitschaft und die Zeit, in der kritische Events verpasst werden können, wird verringert. Wenn man davon ausgeht, dass die Schraubenspitze sehr nah an der Wärmequelle beziehungsweise Wärmesenke angeordnet ist, kann die Temperaturdifferenz und damit die zu harvestende Energie maximiert werden. Die Temperaturdifferenz kann weiter erhöht werden, indem beispielsweise ein Kühlkörper als Wärmesenke eingesetzt wird. Dieser Kühlkörper kann entsprechend weiteren Ausführungsbeispielen natürlich auch als Wärmequelle dienen, wenn zum Beispiel eine externe Bestrahlung erfolgt. Der Kühlkörper wird entsprechend den Ausführungsbeispielen auf den Schraubenkopf aufgesetzt und ist somit höher. Der Effekt tritt verstärkt bei großem Wärmestrom zum umgebenden Medium auf, z. B. bei höherer Windgeschwindigkeit.

Entsprechend den Zusatzaspekten kann die Schraube einen Schaft aufweisen, wobei das Thermoelement in die Schraube beziehungsweise in den Schaft eingelassen ist. Hierzu kann entsprechend den Zusatzaspekten eine Bohrung vorgesehen sein. Die vertikale Anordnung ermöglicht es, mehr Fläche für die Thermogeneratoren (z. B. zu der Innenwand der Bohrung) zu nutzen. Somit ist das ganze System auch für kleinere Schraubendurchmesser geeignet. Entsprechend einem Zusatzaspekt kann die eben erläuterte Bohrung eine Konusbohrung sein. Diese schräge Anordnung ist aus mechanischer Sicht sinnvoll. Dadurch kann ein höherer Anpassdruck für die Thermogeneratoren gegen die Schraubenwand beziehungsweise Wärmebrücke realisiert werden. Es werden Luftanschlüsse vermieden und der thermische Widerstand zur Wärmequelle beziehungsweise Wärmesenke verringert. Der Schraube steht somit mehr elektrische Leistung zur Verfügung. Außerdem gestaltet sich der Zusammenbau wesentlich einfacher und reproduzierbarer. Diese Vorteile werden verstärkt, wenn entsprechend weiteren Zusatzaspekten der Thermogenerator an einer Seite angelötet ist.

Entsprechend Zusatzaspekten ist eine Wärmebrücke zwischen dem Thermoelement (z. B. im Fußpunkt der Schraube), dem Schraubenkopf beziehungsweise dem Kühlkörper vorgesehen. Diese Wärmebrücke kann beispielsweise gegenüber der Schraube beziehungsweise dem Schraubenschaft isoliert sein. Eine Verlötung (siehe oben) kann zwischen einer Wärmebrücke und dem Thermogenerator vorgesehen sein.

Entsprechend einem Zusatzaspekt kann das Thermoelement ringförmig ausgebildet sein. Dies kann unter anderem durch flächige, flexible (biegsame) Thermogeneratoren realisiert werden. Eine weitere Vergrößerung der Kontaktflächen wird durch den Einsatz von derartigen ringförmigen Thermogeneratoren erreicht.

Wie oben schon im Zusammenhang mit den Vorteilen erläutert, kann eine Elektronik in die Schraube integriert sein. Hierbei wäre es entsprechend den Zusatzaspekten denkbar, dass die Elektronik einen Prozessor für eine Sensorik, die Sensorik selber und/oder Kommunikationsmittel aufweist. Entsprechend weiteren Zusatzaspekten kann die Elektronik auch einen Energiespeicher aufweisen. Dieser Energiespeicher dient zur Zwischenspeicherung der elektrischen Energie. An dieser Stelle sei angemerkt, dass die Elektronik beispielsweise zwischen Schraubenkopf und dem Kühlkörper angeordnet sein kann. Der Kühlkörper kann mittels einer optionalen Wärmebrücke mit dem Thermoelement verbunden sein, wobei die Wärmebrücke beispielsweise durch eine Bohrung in der Elektronik hindurchragt.

Entsprechend den Zusatzaspekten kann die Sensorik beispielsweise einen Temperatursensor umfassen, dieser kann beispielsweise im Fuß der Schraube vorgesehen sein. Entsprechend einem weiteren Zusatzaspekt wäre es auch denkbar, dass die Schraube eine Solarzelle aufweist. Hintergrund hierzu ist, dass das Energie-Harvesting mit dem Thermogenerator insbesondere bei einer Temperaturdifferenz erfolgt. Diese Temperaturdifferenz kann beispielsweise dadurch herrühren, dass sich die Außentemperatur in Folge von Sonnenlichtbestrahlung gegenüber der Temperatur der Schraubenspitze erhöht oder bei Ausbleiben der Bestrahlung, der Schraubenkopf beziehungsweise Kühlkörper schneller abkühlt. Im Zeitraum, wo Sonnenlicht auf die Schraube fällt, aber Schraubenkopf und Schraubenspitze ähnliche Temperaturen aufweisen, ist die Effizienz des Energie-Harvestings mit dem Thermoelement begrenzt. Zusätzliche Energie kann dann mit der Solarzelle generiert werden.

Entsprechend den Zusatzaspekten können Schraubenkopf und Kühlkörper integriert beziehungsweise kombiniert sein. Die Nutzung des Schraubenkopfes als Kühlkörper ermöglicht eine größere Kühlfläche bei gleichbleibender Größe des Schraubenaufbaus. Dadurch erhöht sich die Leistungsdichte des Moduls gegenüber einer getrennten Ausführung von Schraubenkopf und Schraubenkühlkörper.

Entsprechend den Zusatzaspekten sind also der Schraubenkopf entsprechend Wärmequelle oder Wärmesenke und die Schraubenspitze das entsprechende Gegenstück. Dies kann entsprechend den Zusatzaspekten von der Zeit beziehungsweise Umgebungssituation abhängen.

Entsprechend den Zusatzaspekten kann davon ausgegangen werden, dass Kühlkörper und Wärmebrücke zweiteilig sind. Eine zweiteilige Ausführung von Kühlkörper und Wärmebrücke ermöglicht es, möglichst viele Flächen für die Elektronik bzw. Batterie zu nutzen, da diese von oben eingesetzt werden kann. Ein besseres thermisches Verhalten entsteht aber, wenn die Elemente Kühlkörper und Wärmebrücke als Integralbauteil ausgeführt sind.

Durch die Verwendung eines Normteils als Außengeometrie der Schraube, wird die nachträgliche Integration des Messsystems in bereits bestehenden Anwendungen vereinfacht. Auch kann das Messsystem gegen ein vorhandenes Messsystem, welches die gleichen Normteile verwendet, ausgetauscht werden, ohne dass Änderungen am sonstigen Aufbau vorgenommen werden. Durch die Verwendung einer Schraube oder eines Profils, welches geklemmt angebracht wird, wird ein guter thermischer Kontakt zur Wärmequelle/-senke vorgesehen.

An dieser Stelle sei darauf hingewiesen, dass obige Ausführungsbeispiele nur illustrativ sind und der Schutzbereich durch die nachfolgenden Patentansprüche definiert wird.

| | |
|---|---|
| Schraubverbindungsmittel (10) | Schraube (10s) |
| Sensorik (18, 12k, 12tk) | Kommunikationsmittel (14) |
| Energieversorgungsmittel (16) | Schraubverbindungselement (10s) |
| Unterlegscheibe (12) | Aussparung (12n) |
| Mitnehmer (12m) | Kabel (12ka) |
| Energie-Harvester (16t) | Schraubenkopf (10k) |
| Schraubenschaft (10s) | |

## Patentansprüche

1. Verbindungsmittel (10), insbesondere Schraubverbindungsmittel, mit folgenden integrierten Merkmalen:
einem Energieversorgungsmittel (16);
einem Kommunikationsmittel (14),
und einer Sensorik (18, 12k, 12tk),
wobei die Energieversorgungsmittel (16) ausgebildet sind, um die Sensorik (18, 12k, 12tk) und/oder die Kommunikationsmittel (14) mit Energie zu versorgen,
wobei die Kommunikationsmittel (14) ausgebildet sind, um einen Sensorwert, der unter Zuhilfenahme der Sensorik (18, 12k, 12tk) ermittelt ist, nach extern zu übertragen.

2. Verbindungsmittel (10) gemäß Anspruch 1, wobei die Schraubverbindungsmittel (10) in Form eines Schraubverbindungselements (10s) ausgeführt sind.

3. Verbindungsmittel (10) gemäß Anspruch 1, wobei die Schraubverbindungsmittel (10) als Schraubverbindungssystem mit zumindest zwei einzelnen Elementen ausgeführt sind.

4. Verbindungsmittel (10) gemäß Anspruch 3, wobei das Schraubverbindungssystem eine Schraube (10s) oder einer Mutter als erstes Element und eine Unterlegscheibe (12) als zweites Element umfasst.

5. Verbindungsmittel (10) gemäß Anspruch 4, wobei die Sensorik (18, 12k, 12tk) in der Unterlegscheibe (12) integriert ist und wobei die Energieversorgungsmittel (16) und Kommunikationsmittel (14) in der Schraube (10s) oder einer Mutter integriert sind.

6. Verbindungsmittel (10) gemäß Anspruch 4 oder 5, wobei die Unterlegscheibe (12) mindestens zwei Elemente umfasst.

7. Verbindungsmittel (10) gemäß Anspruch 6, wobei eines der zwei Elemente der Unterlegscheibe (12) eine Aussparung (12n) oder konzentrische Aussparung (12n) auf einer der Schraube (10s) oder der Mutter zugewandten Seite aufweist.

8. Verbindungsmittel (10) gemäß einem der Ansprüche 4 bis 7, wobei die Schraube (10s) oder die Mutter und/oder die Unterlegscheibe (12) auf einer jeweiligen dem anderen Element zugewandten Seite angeordnete Mitnehmer (12m) umfasst, die ausgebildet sind, ein Verdrehen der Schraube (10s) oder der Mutter gegenüber der Unterlegscheibe (12) einzuschränken.

9. Verbindungsmittel (10) gemäß Anspruch 7, wobei die Sensorik (18, 12k, 12tk) mit der Energieversorgung und/oder der Kommunikationsmitteln (14) über Kabel (12ka) verbunden ist, und wobei die Kabelverbindung in der Aussparung (12n) verläuft.

10. Verbindungsmittel (10) gemäß einem der vorherigen Ansprüche, wobei die Sensorik (18, 12k, 12tk) über eine Kabelverbindung oder einem elektrischen Kontakt mit den Energieversorgungsmitteln (16) und/oder den Kommunikationsmitteln (14) verbunden ist.

11. Verbindungsmittel (10) gemäß einem der Ansprüche 1 bis 8, wobei die Sensorik (18, 12k, 12tk) mit den Energieversorgungsmitteln (16) und/oder Kommunikationsmitteln (14) induktiv oder kapazitiv verbunden sind.

12. Verbindungsmittel (10) gemäß einem der vorherigen Ansprüche, wobei die Energieversorgungsmittel (16) einen Energie-Harvester (16t), einen thermischen Energie-Harvester (16t), eine Solarzelle als Energie-Harvester (16t) und/oder einen Vibrationswandler als Energie-Harvester (16t) aufweisen.

13. Verbindungsmittel (10) gemäß einem der vorherigen Ansprüche, wobei Kommunikationsmittel (14) Weitbereichskommunikationsmittel, insbesondere WiFi oder Long-Range-Bluetooth umfassen.

14. Verbindungsmittel (10) gemäß einem der vorherigen Ansprüche, wobei die Schraubverbindungsmittel (10) Nahbereichskommunikationsmittel aufweisen, wobei die Nahbereichskommunikationsmittel ausgebildet sind, um eine Nahbereichskommunikation auch ohne Energieversorgung durch die Energieversorgungsmittel (16) durchzuführen; und/oder
wobei die Schraubverbindungsmittel (10) Nahbereichskommunikationsmittel aufweisen, wobei die Nahbereichskommunikationsmittel ausgebildet sind, um eine Nahbereichskommunikation auch ohne Energieversorgung durch die Energieversorgungsmittel (16) durchzuführen, und wobei die Nahbereichskommunikationsmittel ausgebildet sind, um in einem identischen oder zumindest partiell überlappenden oder nicht überlappenden Frequenzband wie die Kommunikationsmittel (14) zu kommunizieren.

15. Verbindungsmittel (10) gemäß einem der vorherigen Ansprüche, wobei die Schraubverbindungsmittel (10) zumindest eine Schraube (10s) umfassen, wobei die Schraube (10s) zumindest eine Aussparung (12n) im Schraubenkopf (10k) und/oder eine Ausfräsung im Schaft aufweist und wobei die Energieversorgungsmittel (16) und/oder die Kommunikationsmittel (14) in der einen oder mehreren Aussparung (12n) angeordnet sind.

16. Verbindungsmittel (10) gemäß einem der vorherigen Ansprüche, wobei die Sensorik (18, 12k, 12tk) eine Temperatursensorik, eine Kraftsensorik oder eine weitere Sensorik (18, 12k, 12tk) umfasst; und/oder
wobei die Sensorik (18, 12k, 12tk) mit einem Prozessor verbunden ist, der ausgebildet ist, den Sensorwert digital oder analog oder auf Basis einer Frequenz, die über einen Wiederstand als frequenzbestimmendes Element variiert wird, auszulesen; und/oder
wobei die Sensorik (18, 12k, 12tk) mit einem Prozessor verbunden ist und wobei der Prozessor zusammen mit den Energieversorgungsmitteln (16) und/oder den Kommunikationsmitteln (14) angeordnet ist und wobei der Prozessor ausgebildet ist, den Sensorwert auszulesen.

17. Verbindungsmittel (10) gemäß einem der vorherigen Ansprüche, wobei Verbindungsmittel (10) eine Schraube (10s) umfassen und wobei ein Kühlkörper als Teil des Schraubenkopfes (10k) vorgesehen ist.
